# EUROPEAN PATENT SPECIFICATION

(11) **EP 3 116 763 B1**
(45) Date of publication and mention of the grant of the patent: **21.02.2018**
(21) Application number: 14837048.9
(22) Date of filing: 19.12.2014
(51) Int. Cl.: B62B 7/04, B62B 9/18

(54) **CHILD STROLLER**
KINDERWAGEN
POUSSETTE

(30) Priority: 11.03.2014 PL 40749414
(43) Date of publication of application: 18.01.2017
(73) Proprietor: Smartthing Janusz Pokorski, 60-479 Poznan (PL)
(72) Inventor: POKORSKI, Janusz, 60-479 Poznan (PL)
(74) Representative: Piatkowska, Elzbieta
(86) International application number: PCT/PL2014/000149
(87) International publication number: WO 2015/137831

(56) References cited:
- EP-A1- 1 018 462
- DE-A1- 19 637 268
- GB-A- 2 416 731
- US-A- 1 616 676

## Description

The invention relates to a child stroller that is especially useful on unpaved ground.

A stroller with a collapsible load-bearing frame is widely known, the chassis of which is equipped with two pairs of ground wheels arranged as a two-track system. Usually, the rear wheel axles are rigidly fixed to the load-bearing frame, while the front turning wheel axles are mounted on short trailing rockers. These rockers are provided with bearings in a pivoting manner on the vertical axels which protrude downwards from the load-bearing frame arms. The rear wheels are supplied with simple brakes in the form of tilting levers which are pushed to the wheel tread when activated by the foot pedal.

German Patent Application DE 19637268 disclosures the child stroller according to the preamble of claim 1 with a pair of ground wheels arranged one by one as the single track. Ground wheels arc mounted on the ends of a longitudinal load bearing frame, concreating chassis of the stroller. In the central part of the load bearing frame the seat is mounted. The front steering wheel is fixed in revolving, generally perpendicular, steering fork equipped with two steering rods, while the trailing ground wheel is provided with bearings directly in the load bearing frame. The stroller is equipped with two support wheels, situated on both sides of the trailing wheel, adjustable, raised up and not adhering to the ground while riding.

Moreover European Patent Application No.: EP 1018462 disclosures infant carrier for rough terrain with single ground wheel provided with bearings directly in load bearing frame. That known infant career is equipped with pair of supporting wheels provided with bearings at the ends of supporting arms hinge assembled to the load bearing frame. Supporting arms with supporting wheels are lifted upwards and does not touch the ground while riding.

A child stroller equipped with a seat mounted on the load-bearing frame and a chassis connected thereto, with one pair of ground wheels arranged one after the other as a single-track system, wherein the two ground wheels are provided with bearings at the outer ends of two rockers, the inner ends of which are joined in a tilting manner around the horizontal axles to the central bracket connected to the load-bearing frame located above it. Each rocker consists of two parallel arms joined in the middle by a transverse connector. Both rockers are additionally connected to the bracket by shock-absorbers. In a preferred embodiment of the invention, each shock-absorber is in the form of a stretched, resilient and damping element, preferably a spindle-shaped fitting of polyurethane, the geometry of which ensures a progressive action of the stroller suspension. With a small load and the spindle-shaped fitting straightening out, the suspension reaction is relatively soft, and with a larger load, the fitting is stretched, meaning a harder reaction of the suspension. In another preferred embodiment, the shock-absorber is a compressed, resilient and damping element, preferably in the form of an oil and spring shock-absorber or oil and gas shock absorber. At least one ground wheel of the stroller is equipped with a brake. In a preferred embodiment each wheel of the stroller has a brake. The best braking result is achieved when the brake of each wheel is a disk brake, but a conventional shoe brake can also be used. Having two side arms, the outline of the load-bearing frame is nearly U-shaped. The upper part of the central bracket ends on the top with a transverse plate joined to the lower sections of the frame side arms. And the upper sections of the frame side arms are joined together by a bow-shaped grip. A footrest is mounted on the lower sections of the frame side arms. The stroller frame has a side standing support in the form a tilting rod connected thereto by an articulated joint. If necessary, the stroller chassis can have no rockers or shock-absorbers, with the ground wheels directly connected to the central bracket by strengthened forks.

According to the invention as defined in claim 1, the solution makes the stroller adapted to unpaved or sticky ground, especially narrow paths.

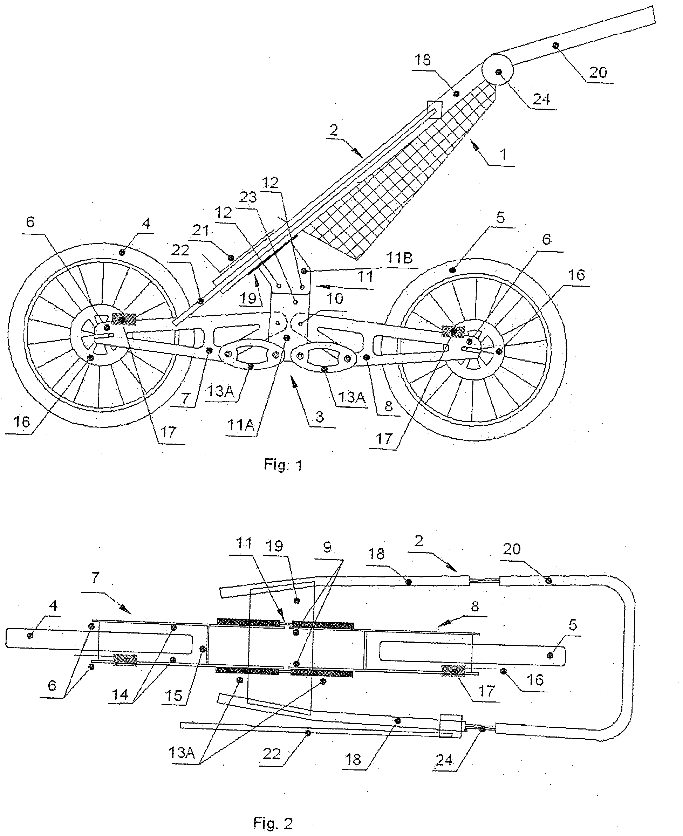

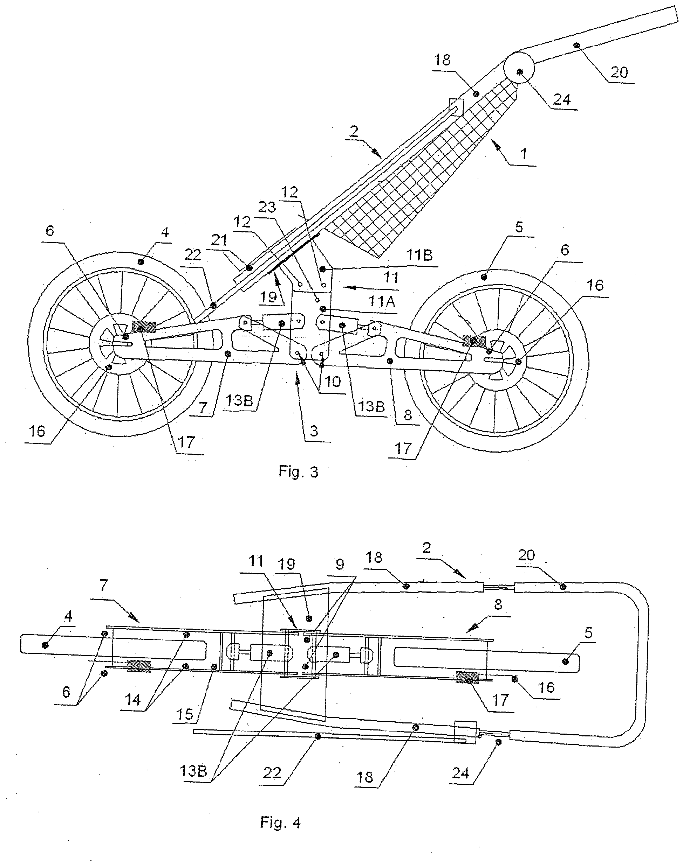

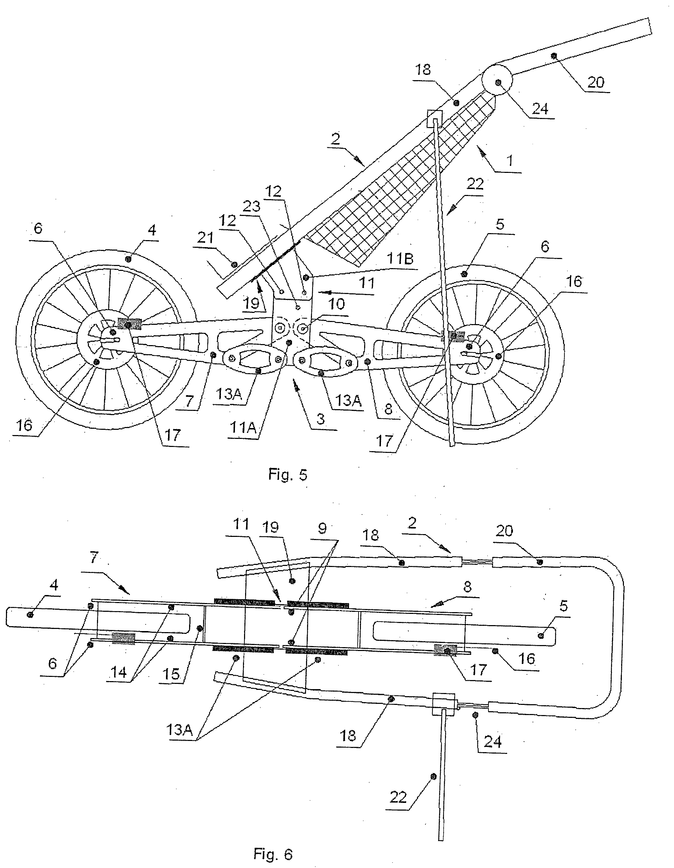

The object of the invention as an embodiment is shown in the drawing where Fig. 1 presents a side view of the child stroller ready for use, Fig.2 a top view of the stroller according to Fig. 1, Fig. 3 a side view of the stroller with gas shock-absorbers, Fig.4 a top view of the stroller according to Fig.3, Fig.5 a side view of the stroller standing, Fig.6 - a top view of the stroller according to Fig.5.

The stroller according to the invention has seat **1** mounted on metal load-bearing frame **2** and chassis **3** connected thereto, which is equipped with two ground wheels **4, 5.** The wheels are arranged one after the other as a single track system and provided with bearings at outer ends **6** of two metal rockers **7** and **8,** preferably made of aluminium. Inner ends **9** of rockers **7, 8** are connected in a tilting manner around horizontal axles **10** to lower part **11A** of central bracket **11,** upper angular part **11B** of which is permanently fixed to load-bearing frame **2** above it. Both parts **11A**, **11B** of bracket **11** are joined together by screws **12,** which make it possible to divide the stroller into two assemblies or reciprocally displace these assemblies for storage or transportation. Both rockers **7, 8** are additionally connected to brackets **11** by shock-absorbers in the form of stretched, resilient and damping elements, especially spindle-shaped fittings **13A** of polyurethane or coil springs which are not shown, as well as compressed, resilient and damping elements, especially well-known oil and spring shock-absorbers or oil and gas shock absorbers **13B.** The above shock-absorbers are distinguished by an advantageous dampening characteristic and desired durability. Each rocker **7, 8** consists of two parallel arms **14** joined in the middle by transverse connector **15.** In order to limit the range of rockers **7** and **8** tilting upwards, bracket **11** has stopping buffers which are not shown in the drawing. Ground wheels **4, 5** are equipped with brakes, preferably well-known disk brakes. Each of them consists of friction disk **16** mounted on wheel **4, 5** and block clamp **17** mounted on rocker **7, 8**, a clamp that is controlled by means of a strand which is not shown in the drawing. The outline of load-bearing frame **2** is nearly U-shaped, having two side arms **18** made out of thin-walled metal pipes. Both parts **11A, 11B** of central bracket **11** are made of sheet metal, its upper angular part **11B** ending on the top with transverse plate **19** permanently fixed to the lower sections of side arms **18** of frame **2.** The upper sections of arms **18** are transversely joined by bow-shaped grip **20** intended for pushing the stroller. Footrest **21** is mounted on the lower sections of arms **18.** To ensure stability when the stroller is standing, its frame **2** is equipped with a side standing support in the form of tilting rod **22** connected thereto by an articulated joint. The stroller can be also collapsed with frame **2** and chassis **3** connected, but in this case upper part **11B** of bracket **11** is tilted to the vertical position, and one of screws **12** is driven in additional opening **23** in lower part **11A** of bracket **11.** Moreover, in order to collapse the stroller, grip **20** is tipped around articulated joint **24** to fold it along frame **2,** and both wheels **4, 5** are disconnected from the stroller.

### Designations

**1 -** seat
**2 -** load-bearing frame
**3 -** chassis
**4 -** ground wheel
**5 -** ground wheel
**6 -** rocker end
**7 -** rocker
**8 -** rocker
**9 -** rocker end
**10 -** rocker axel
**11** - bracket
**11A -** bracket lower part
**11B -** bracket upper part
**12 -** screw
**13A -** stretched shock absorber
**13B -** compressed shock absorber
**14 -** rocker arm
**15 -** connector
**16 -** friction disk
**17 -** block clamp
**18 -** frame arm
**19 -** plate
**20 -** grip
**21 -** footrest
**22 -** rod
**23 -** opening
**24 -** articulated joint

## Claims

1. A child stroller equipped with a seat **(1)** mounted on a load-bearing frame **(2)** and a chassis **(3)** connected thereto, with one pair of ground wheels **(4, 5),** arranged one after the other as a single-track system **characterised in that** the two ground wheels **(4, 5)** are provided with bearings at the outer ends **(6)** of two rockers **(7, 8),** the inner ends of which **(9)** are connected in a tilting manner to a central bracket **(11, 11A)** joined to the load-bearing frame **(2)** above it.

2. The stroller according to claim 1 **characterised in that** each rocker **(7, 8)** consists of two parallel arms **(14)** joined in the middle by a transverse connector **(15).**

3. The stroller according to claim 1 or 2 **characterised in that** both rockers **(7, 8)** are additionally connected to the central bracket **(11, 11A)** by shock absorbers **(13A, 13B).**

4. The stroller according to claim 3 **characterised in that** each shock-absorber is in the form of a stretched, resilient and damping element **(13A).**

5. The stroller according to claim 4 **characterised in that** the stretched, resilient and damping element **(13A)** is a spindle-shaped fitting made of polyurethane.

6. The stroller according to claim 3 **characterised in that** each shock-absorber is in the form of a compressed, resilient and damping element **(13B).**

7. The stroller according to claim 6 **characterised in that** the compressed, resilient and damping element **(13B)** is an oil and spring or oil and gas shock-absorber.

8. The stroller according to claim 1 **characterised in that** at least one of the wheels **(4, 5)** is equipped with a brake.

9. The stroller according to claim 8 **characterised in that** each wheel **(4, 5)** has a brake.

10. The stroller according to claim 9 **characterised in that** the brake of each wheel **(4, 5)** is a disk brake **(16, 17).**

11. The stroller according to claim 1 **characterised in that** the load-bearing frame **(2)** has a nearly U-shaped outline and two side arms **(18),** the upper part **(11B)** of the central bracket (**11**) ending on the top with a transverse plate **(19)** joined to the lower sections of the side arms **(18)** of the frame **(2).**

12. The stroller according to claim 11 **characterised in that** the upper sections of the side arms **(18)** of the frame **(2)** are transversely connected by a bow-shaped grip **(20).**

13. The stroller according to claim 11 **characterised in that** a footrest **(21)** is mounted on the lower sections of the side arms **(18)** of the frame **(2).**

14. The stroller according to claim 1 or 11 **characterised in that** its load-bearing frame **(2)** has a side standing support in the form of a tilting rod **(22)** connected thereto by an articulated joint

## Patentansprüche

1. Kinderwagen, ausgestattet mit einem Sitz (**1)** auf einem Tragrahmen **(2)** und einem Fahrgestell **(3)** mit mindestens einem Paar von Rädern **(4, 5),** die eins hinter dem anderen einspurig verteilt sind, ***dadurch gekennzeichnet, dass*** zwei Räder **(4, 5)** auf den Außenenden **(6)** zweier Querlenker **(7, 8)** gelagert sind, wobei die Innenenden **(9)** schwenkbar am zentralen Träger **(11, 11A),** der mit dem sich darüber befindenden Tragrahmen **(2)** verbunden ist, befestigt sind.

2. Kinderwagen nach Anspruch 1, ***dadurch gekennzeichnet, dass*** jeder Querlenker **(7, 8)** aus zwei parallelen Armen **(14)** mit einer Querverbindung **(15)** in der Mitte besteht.

3. Kinderwagen nach Anspruch 1 oder 2, ***dadurch gekennzeichnet, dass*** beide Querlenker **(7, 8)** eine zusätzliche Verbindung mit dem Träger **(11, 11A)** durch die Federung **(13A, 13B)** haben.

4. Kinderwagen nach Anspruch 3, ***dadurch gekennzeichnet, dass*** jede Federung die Form eines streckbaren federnd-dämpfenden Elements (**13A)** hat.

5. Kinderwagen nach Anspruch 4, ***dadurch gekennzeichnet, dass*** das federnd-dämpfende Element **(13A)** ein spindelförmiges Formstück aus Polyurethan ist.

6. Kinderwagen nach Anspruch 3, ***dadurch gekennzeichnet, dass*** jede Federung die Form eines gedrückten federnd-dämpfenden Elements **(13B)** hat.

7. Kinderwagen nach Anspruch 6, ***dadurch gekennzeichnet, dass*** das gedrückte federnd-dämpfende Element **(13B)** eine Ölfederung oder eine Öl-Gas-Federung ist.

8. Kinderwagen nach Anspruch 1, ***dadurch gekennzeichnet*, *dass*** mindestens ein Rad **(4, 5)** mit einer Bremse ausgestattet ist.

9. Kinderwagen nach Anspruch 8, ***dadurch gekennzeichnet, dass*** jedes Rad **(4, 5)** eine Bremse hat.

10. Kinderwagen nach Anspruch 9, ***dadurch gekennzeichnet,* dass** die Bremse jedes Rades **(4, 5)** eine Scheibenbremse ist **(16, 17).**

11. Kinderwagen nach Anspruch 1, ***dadurch gekennzeichnet, dass*** der Tragrahmen **(2)** ähnliche Form wie der Buchstabe U sowie zwei seitliche Arme **(18)** hat, wobei der obere Teil (**11B)** des zentralen Trägers **(11)** von oben mit einer mit den unteren Abschnitten der seitlichen Arme **(18)** des Rahmens **(2)** verbundenen Querplatte **(19)** abgeschlossen ist.

12. Kinderwagen nach Anspruch 11, ***dadurch gekennzeichnet, dass*** die oberen Abschnitte der seitlichen Arme **(18)** des Rahmens **(2)** mit einem bügelförmigen Halter **(20)** verbunden sind.

13. Kinderwagen nach Anspruch 11, ***dadurch gekennzeichnet, dass*** das Brett **(21)** auf den unteren Abschnitten der seitlichen Arme **(18)** des Tragrahmens **(2)** gesetzt ist.

14. Kinderwagen nach Anspruch 1 oder 11, ***dadurch gekennzeichnet, dass*** sein Tragrahmen **(2)** eine seitliche Standstütze in Form einer damit verbundenen schwenkbaren Stange **(22)** hat.

## Revendications

1. La poussette équipée du siège **(1)** monté sur le cadre porteur **(2)** et le chassis assemblé à lui **(3)** avec au moins une paire de roues porteuses **(4, 5)** installées l'une après l'autre dans le système de deux-roues, **se *caractérisant en ce que*** les deux roues porteuses **(4, 5)** ont des roulements sur les extrémités extérieures **(6)** de deux bras de suspension **(7, 8),** dont les extrémités intérieures **(9)** sont jointes au support central de manière inclinable (**11, 11A),** lié au cadre porteur placé au-dessus de lui **(2).**

2. La poussette telle que définie dans la revendication 1, ***se caractérisant en ce que*** chaque bras de suspension **(7, 8)** se compose de deux bras parallèles **(14),** assemblés au milieu par un connecteur transversal **(15).**

3. La poussette telle que définie dans la revendication 1 ou 2, ***se caractérisant en ce que*** tous les deux bras de suspension **(7, 8)** ont une connexion complémentaire avec le support **(11, 11A)** par l'intermédiaire des amortisseurs (**13A, 13B).**

4. La poussette telle que définie dans la revendication 3, ***se caractérisant en c que*** chaque amortisseur a la forme d'un élément extensible élastique et amortissant (**13A**).

5. La poussette telle que définie dans la revendication 4, ***se caractérisant en c que*** la pièce fusiforme en polyuréthane est l'élément extensible élastique et amortissant **(13A).**

6. La poussette telle que définie dans la revendication 3, ***se* c*aractérisant en ce que*** chaque amortisseur a la forme d'un élément extensible élastique et amortissant compressé **(13B).**

7. La poussette telle que définie dans la revendication 6, ***se caractérisant en ce que*** l'amortisseur huile-ressort ou l'amortisseur huile-gaz est l'élément extensible élastique et amortissant compressé (**13B).**

8. La poussette telle que définie dans la revendication 1, ***se caractérisant en ce qu*'** au moins une des roues **(4, 5)** est équipée du frein.

9. La poussette telle que définie dans la revendication 8, ***se caractérisant en ce que*** chaque roue **(4, 5)** a un frein.

10. La poussette telle que définie dans la revendication 9, ***se caractérisant en ce que*** le frein à disque **(16, 17)** est le frein de chacune des roues **(4, 5).**

11. La poussette telle que définie dans la revendication 1, ***se caractérisant en ce que*** le cadre porteur **(2)** a le contour approché à la lettre U et il a deux bras latéraux **(18),** et **en ce que** la partie supérieure **(11B)** du support central **(11)** est terminée du haut par une plaque transversale **(19),** assemblée aux sections inférieures des bras latéraux **(18)** du cadre **(2).**

12. La poussette telle que définie dans la revendication 11, ***se caractérisant en ce que*** les sections supérieures des bras latéraux **(18)** du cadre **(2)** sont assemblées transversalement par la poignée arquée **(20).**

13. La poussette telle que définie dans la revendication 11, ***s caractérisant en ce que*** le repose-pieds **(21)** est fixé aux sections inférieures des bras latéraux **(18)** du cadre **(2).**

14. La poussette telle que définie dans la revendication 1 ou 11, ***se caractérisant en ce que*** son cadre porteur **(2)** a l'appui de stationnement latéral sous forme du traversin inclinable assemblée à lui de manière articulée **(22).**
